Europäisches Patentamt

European Patent Office

Office européen des brevets

(11) Veröffentlichungsnummer : **0 150 482**
**B1**

(12) **EUROPÄISCHE PATENTSCHRIFT**

(45) Veröffentlichungstag der Patentschrift :
15.04.87

(51) Int. Cl.⁴ : **C 09 J   5/02, C 03 C  27/00**

(21) Anmeldenummer : 84116174.8

(22) Anmeldetag : 22.12.84

(54) Glasprimer.

(30) Priorität : 12.01.84 DE 3400860

(43) Veröffentlichungstag der Anmeldung :
07.08.85 Patentblatt 85/32

(45) Bekanntmachung des Hinweises auf die Patenterteilung : 15.04.87 Patentblatt 87/16

(84) Benannte Vertragsstaaten :
BE DE FR GB IT NL SE

(56) Entgegenhaltungen :
CHEMICAL ABSTRACTS, Band 85, 1976, Seite 83, Nr.
194241c, Columbus, Ohio, US
CHEMICAL ABSTRACTS, Band 101, 1984, Seite 80,
Nr. 39994f, Columbus, Ohio, US

(73) Patentinhaber : Henkel Kommanditgesellschaft auf
Aktien
Postfach 1100 Henkelstrasse 67
D-4000 Düsseldorf-Holthausen (DE)

(72) Erfinder : Özelli, Riza Nur, Dr.
Stephanusstrasse 37
D-4040 Neuss 22 (DE)
Erfinder : Hoffmann, Hans-Josef
Möhlenring 63
D-4152 Kempen 1 (DE)
Erfinder : Kohlstadt, Hans-Peter
Virchowstrasse 16a
D-5620 Velbert 1 (DE)

**Beschreibung**

Die Erfindung betrifft einen Primer, der zur Vorbehandlung von Glasoberflächen dient, die mittels üblicher Klebstoffe an starre oder flexible Substrate gebunden werden sollen.

Glas ist ein schwierig zu verklebendes Substrat, da die Direktverklebung nicht zu Verbunden führt, die hohen Anforderungen bezüglich mechanischer Beanspruchbarkeit und Dauerhaftigkeit genügen. Es wurden zahlreiche Anstrengungen unternommen, geeignete Primer zu entwickeln. So wird beispielsweise in der veröffentlichten US-Patentanmeldung B 417,014 ein Primer auf Basis eines Harzes und eines Silans, wie beispielsweise N-2-Amino-ethyl-3-aminopropyltrimethoxysilan, vorgeschlagen. Wenngleich derartige Primer für manche Anwendungen ausreichend hydrolyse- und wasserbeständige Verklebungen ermöglichen, so besteht doch ein Bedarf, die Wasserfestigkeit von Glasverklebungen weiter zu steigern. So sind beispielsweise im Automobilbau wasserfeste Verklebungen von Elastomeren mit Glas von Interesse.

Es ist somit Aufgabe der Erfindung, einen Primer — also ein Vorbehandlungsmittel — für Glas zur Verfügung zu stellen, der es erlaubt, mit Hilfe an sich bekannter Klebstoffe, Glas hydrolysebeständig an flexible oder starre Substrate, beispielsweise Elastomere oder Metalle zu binden.

Gegenstand der Erfindung ist somit ein Primer zur Vorbehandlung von Glas bei der wasserfesten Verklebung auf Basis von
— Harzen
— funktionellen Silanen
— Lösungsmitteln und weiteren Zusätzen
dadurch gekennzeichnet, daß Organosilazane und gewünschtenfalls mehrfunktionelle Isocyanate enthalten sind, und daß die Primer die folgende mengenmäßige Zusammensetzung aufweisen :

2-10 Gew.-% Harz
2,5-25 Gew.-% funktionelle Silane
0,5-5 Gew.-% Organosilazane
70-95 Gew.-% Lösungsmittel aus der Klasse der Ketone, Ester, aromatischen Kohlenwasserstoffe, aliphatischen Kohlenwasserstoffe sowie Halogenkohlenwasserstoffe
0-10 Gew.-% polyfunktionelle Isocyanate

Ein weiterer Gegenstand der Erfindung betrifft die Verwendung des Glasprimers.

Die erfindungsgemäßen Primer enthalten als kennzeichnenden Bestandteil Organosilazane. Organosilazane sind Umsetzungsprodukte von Organohalogensilanen mit Ammoniak oder Aminen. Im Falle der vorliegenden Erfindung sind die Umsetzungsprodukte mit Ammoniak bevorzugt. Derartige Produkte sind nicht neu, ihre Herstellung wird beispielsweise in der deutschen Offenlegungsschrift 28 34 027 beschrieben. Aufgrund ihrer Si-N-Bindungen sind Organosilazane an sich hydrolyseempfindliche Substanzen. Weiterhin ist bekannt, daß diese Produkte bisher in der Kautschukindustrie als Formtrennmittel eingesetzt worden sind. Um so erstaunlicher ist es für den Fachmann, daß Organosilazane die Hydrolysebeständigkeit von Glasverklebungen, insbesondere auch die Hydrolysebeständigkeit von Verklebungen zwischen Glas und Elastomeren verbessern können.

Die Herstellung der erfindungsgemäß eingesetzten Organosilazane kann nach dem Verfahren der deutschen Offenlegungsschrift 28 34 027 erfolgen. Danach geht man von Lösungen der entsprechenden Organohalogensilane in inerten Lösungsmitteln aus und setzt unter Druck und bei Temperaturen zwischen 0 und 50 °C mit flüssigem Ammoniak um.

Geeignete Organohalogensilane, die nach diesem Verfahren zu den erfindungsgemäß eingesetzten Organosilazanen weiterverarbeitet werden können, sind Diorganodihalogensilane und/oder Organotrihalogensilane beziehungsweise Triorganohalogensilane. Vorzugsweise wird von den Chlorverbindungen ausgegangen. Es können jedoch auch die Bromverbindungen als Ausgangsmaterialien verwendet werden.

Die so hergestellten und erfindungsgemäß eingesetzten Organosilazane enthalten organische Gruppen, die direkt an Silicium gebunden sind. Diese organischen Gruppen können Alkyl- oder Arylgruppen sein. Es können erfindungsgemäß Organosilazane eingesetzt werden, die gleiche oder unterschiedliche Kohlenstoffreste am Silicium aufweisen.

Geeignete Si-ständige aromatische Reste sind Phenylgruppen oder substituierte Phenylgruppen, geeignete aliphatische Reste weisen bevorzugt 1 bis 7 C-Atome auf, so können Methyl-, Ethyl-, Propyl-, Isopropyl-, Butyl-, Penthyl-, Neopentyl-, Hexyl-, Cyclohexyl- oder Benzylgruppen am Silicium gebunden sein. Die Seitengruppen können ihrerseits weitere funktionelle Gruppen aufweisen, sofern derartige Gruppen nicht mit der Si-N-Bindung reagieren. Geeignete funktionelle Gruppen sind beispielsweise Amino- oder Mercapto-Gruppen. Es können auch Organosilazane mit olefinischen Doppelbindungen, beispielsweise Vinyl- oder Allyl-Gruppen, hergestellt und eingesetzt werden.

Bevorzugte Organosilanzane sind die Umsetzungsprodukte von Methyltrichlorsilan und/oder Dimethyldichlorsilan mit einem Überschuß an Ammoniak nach der DOS 28 34 027 sowie die analogen Propylverbindungen.

0 150 482

Die erfindungsgemäßen Glasprimer können weiterhin mehrfunktionelle Isocyanate enthalten. Die Mitverwendung mehrfunktioneller Isocyanate ist nicht zwingen, empfiehlt sich aber, wenn beispielsweise Glas mit Metallen verklebt werden soll. Geeignete mehrfunktionelle Isocyanate sind in erster Linie Diisocyanate, beispielsweise aromatische Diisocyanate, wie Toluylendiisocyanat, Xylylendiisocyanat, Diphenylmethandiisocyanat oder technisches (höher kondensiertes) Diphenylmethandiisocyanat (Funktionalität um 2,3). Weiterhin sind aliphatische Diisocyanate, wie Isophorondiisocyanat, geeignet. Anstelle der Diisocyanate an sich können weiterhin auch Prepolymere verwendet werden. Hier sind Prepolymere aus mehrfunktionellen Alkoholen, insbesondere aus Diolen und Triolen, wie Ethylenglykol, Propylenglykol, kondensierten Ethylen- und Propylenglykolen, Glycerin, Trimethylolethan, Trimethylolpropan und/ oder Pentaerythrit, mit einem deutlichen Überschuß (mehr als 20 mol-%) der vorgenannten aliphatischen und/oder aromatischen Diisocyanate geeignet. Derartige Prepolymere werden in vielen Bereichen der Technik eingesetzt und sind dem Klebstoff-Fachmann wohl bekannt. Sie können als solche bezogen oder durch Vermischen der Rohstoffe im geeignete Verhältnis hergestellt werden, wobei die Zugabe der Hydroxyverbindung zum Diisocyanat das bevorzugte Herstellungsverfahren ist.

Anstelle von Addukten von Diisocyanaten an mehrfunktionelle Alkohole (Polyurethanprepolymere) können auch Addukte der vorgenannten aromatischen oder aliphatischen Diisocyanate an mehrfunktionelle Epoxide eingesetzt werden. So ist das Umsetzungsprodukt von Triglycidylisocyanurat mit Diphenylmethandiisocyanat im Molverhältnis 1 : 3 oder das Umsetzungsprodukt des Diglycidylethers des Bisphenol A mit Diphenylmethandiisocyanat im Molverhältnis 1 : 2 ein geeigneter Zusatzstoff.

Die erfindungsgemäßen Glasprimer enthalten weiterhin eine Harzkomponente. Bevorzugte Harze sind Phenolharze, insbesondere reaktive Phenolharze. Unter reaktiven Phenolharzen werden Phenolharze verstanden, die noch nicht völlig vernetzt sind d. h. keinen dreidimensionalen gitterartigen Molekülaufbau aufweisen. Derartige reaktive Phenolharze sind beispielsweise sauer kondensierte Phenolformaldehyd- oder Resorcinformaldehydharze die üblicherweise als Novolake bezeichnet werden. Weiterhin geeignet sind aber auch basisch ankondensierte Phenolharze, die noch Hydroxymethylgruppen enthalten und beim Erwärmen zur Polykondensation befähigt sind. So können Phenolharze im engeren Sinn, Resorcinformaldehydharze oder auch Cumaron-Inden-Harze eingesetzt werden. Außer den Harzkomponenten an sich können auch modifizierte Harze, etwa Terpen-modifizierte Phenolharze eingesetzt werden. Eine Übersicht über Phenolharze findet sich in Houben-Weyl, Makromolekulare Stoffe, Teil 2 (Band 14) Georg Tieme Verlag, Stuttgart, 1963, Seiten 197 ff.

Nach einer besonders bevorzugten Ausführungsform der Erfindung werden sowohl Novolake als auch Resolharze z. B. Gemische aus Novolak und Tertiärbutylphenol-Resolharz eingesetzt.

Für den Einsatz der erfindungsgemäßen Primer ist es weiterhin bevorzugt, Phenolharze auszuwählen, die bei 25 °C eine Viskosität von 1 000 bis 5 000 mPas aufweisen und noch OH-Zahlen von etwa 300 bis 500 haben. Derartige Produkte sind auf Basis von Phenol, von Kresolen, von Tertiärbutylphenol, Amylphenol oder von Resorcin oder auch Bisphenol A bekannt.

Die in den erfindungsgemäßen Primern zu verwendenden Silane sind bekannte Verbindungen, die allgemein als sogenannte Haftvermittler von den kommerziellen Herstellern empfohlen werden. Erfindungsgemäß bevorzugt sind Produkte, die reaktive Gruppen enthalten, wie etwa Vinyltriethoxysilan, Vinyltrimethoxysilan, Vinyl-tris(β-methoxyethoxy)-silan, γ-Methacryloxypropyltrimethoxy-silan, γ-Methacryloxypropyl-tris (2-methoxyethoxy)-silan, γ-Mercaptopropyl-trimethoxy-silan, γ-Aminopropyltriethoxysilan oder das Addukt von Acrylsäure an diese Verbindung.

Weiterhin kommen folgende Silane in Frage : γ-Chloropropyltrimethoxy-silan, γ-Glycidoxypropyltrimethoxy-silan, Vinyltriacetoxysilan, β(3,4-Epoxycyclohexyl)-ethyltrimethoxysilan sowie N-β-(aminoethyl)-γ-aminopropyltrimethoxysilan bzw. dessen Methacrylsäureaddukt in methanolischer Lösung.

Als Lösungsmittel für die erfindungsgemäßen Primer sind insbesondere Ketone, Ester, aromatische Kohlenwasserstoffe, aliphatische Kohlenwasserstoffe sowie Halogenkohlenwasserstoffe geeignet. Besonders bevorzugte Lösungsmittel sind Methylethylketon, Alkohol/Ketongemische, Methylenchlorid und dessen Gemische mit Ethylglykolacetat.

Die erfindungsgemäßen Primer haben die folgende mengenmäßige Zusammensetzung

A. 2 bis 10, vorzugsweise 3 bis 7 Gew.-% mindestens eines Harzes
B. 2,5 bis 25, vorzugsweise 5 bis 15 Gew.-% eines funktionellen Silans
C. 0,5 bis 5, vorzugsweise 1 bis 2 Gew.-% eines Organosilazans
D. 70 bis 95, vorzugsweise 80 bis 90 Gew.-% organisches Lösungsmittel und
E. 0 bis 10, vorzugsweise 1 bis 6 Gew.-% eines polyfunktionellen Isocyanats, insbesondere eines Präpolymeren auf Basis mehrfunktioneller Alkohole und eines Überschusses an aliphatischen oder aromatischen Diisocyanaten und/oder eines Adduktes polyfunktioneller Epoxide an aliphatische oder aromatische Diisocyanate.

Die Anwendung der erfindungsgemäßen Primer ist einfach. Die Lösungen werden in üblicher Weise, d. h. mittels Spritzpistolen, Pinseln oder Rakeln, auf gesäuberte Glasoberflächen aufgetragen. Es wird sodann das Lösungsmittel verdunstet und das zweite Substrat mit einem dafür geeigneten Haftmittel aufgeklebt.

Die erfindungsgemäßen Glasprimer sind insbesondere dann geeignet, wenn polare oder unpolare Elastomere unter Vulkanisationsbedingungen mit üblichen Vulkanisationsklebstoffen auf Glas aufvulka-

3

nisiert werden. Geeignete Vulkanisationsklebstoffe werden beispielsweise in der deutschen Patentanmeldung 30 41 841.8 beschrieben. Darüber hinaus können derartige Verklebungen auch mit weiteren üblichen Vulkanisationsklebern durchgeführt werden. Die Nützlichkeit der erfindungsgemäßen Primer ist nicht an Vulkanisationsklebstoffe gebunden. So werden auch günstige Ergebnisse erhalten, wenn Glas mit Polyurethanklebstoffen an andere Substrate gebunden werden soll. Dies gilt insbesondere bei Glas-Metall-Verklebungen. Hierbei ist es bervorzugt, dem Primer ein Polyurethanprepolymer zuzusetzen.

Weiterhin sind die Primer nützlich, wenn sie mit Hilfe von ein- oder zweikomponentigen Epoxidklebstoffen oder mit handelsüblichen Acrylatklebstoffen verklebt werden sollen.

In allen genannten Fällen liegt der besondere Vorteil in einer weiteren Steigerung des Hydrolysebeständigkeit der Verbunde. Dabei haben sich die Primer insbesondere bei Verbunden bewährt, die bei stark schwankenden Temperaturen einer lang dauernden Bewitterung ausgesetzt sind. So genügen die unter Mitverwendung der Primer hergestellten Verbunde den Anforderungen des Automobilbaus.

Es wurden verschiedene Gemische hergestellt. Die Zusammensetzung dieser Gemische ist in der nachstehenden Tabelle zusammengefaßt.

| Primerzusammensetzung Angaben in Gew.-% | 1[4] | 2[4] | 3[4] | 4 | 5 | 6[4] |
|---|---|---|---|---|---|---|
| γ-Aminopropyltriethoxysilan | 6 | – | – | – | 8 | – |
| Vinyltriethoxysilan | 6 | – | 5 | 5 | – | 4 |
| γ-Mercaptopropyltrimethoxysilan | 5 | – | – | 5 | 2 | 6 |
| γ-Mercaptopropyltrimethoxysilan/MDI-Addukt 1) | – | 15 | 10 | – | – | – |
| Novolak-A | – | – | – | 5 | 3 | – |
| t-Butylphenolharz ( Resol ) F = 80-90 | – | – | – | – | 4 | – |
| Polymethylsilazan 2) | – | – | – | 2 | 1 | – |
| Triglycidylisocyanurat/MDI-Addukt 1) | – | – | 5-- | – | – | 6 |
| Methylethylketon | 48 | 49 | 46 | 47 | 47 | 49 |
| Methylenchlorid | 35 | 36 | 34 | 36 | 35 | 35 |

Die Produkte enthalten ca. 80 bis 90 % Lösungsmittel, wie zum Beispiel Methylethylketon, Alkohol/Keton-Gemische, Methylenchlorid/Ethylglykolacetat-Gemische und so weiter. Diese gemische wurden auf sauberen Glasoberflächen als Primer mittels Spritzpistole oder Pinsel aufgetragen. Nach Trocknung der Primerschicht wurden die Oberflächen mit einem Standardbindemittel aus, der Chemosil-® [3] Palette beschichtet, hier wurde z. B. Chemosil® × 4100 [5] eingesetzt.

[1] MDI = Diphenylmethandiisocyanat
[2] Polymethylsilazan entsprechend der DOS 28 34 027
[3] Bindemittel zum Aufvulkanisieren von Kautschuk auf stabile Substrate, Henkel KGaA
[4] Vergleichsversuche
[5] Bindemittel gemäß EP-A-51798 Chemosil® × 4100

Nach der Trocknung des Chemosil® Haftmittelfilmes wurde auf die beschichteten Glasoberflächen ein EPDM-[4] Profil aufextrudiert. Danach wurde das EPDM-Extrudat im Heißluftschrank bei 170 °C während 15 min vulkanisiert.

Beispiele 4 und 5 beschreiben die erfindungsgemäßen Primer.
Als EPDM-Mischung wurde folgende Zusammensetzung verwendet.

[4] Poly-(ethylen-propylendien)

| | | |
|---|---|---|
| Keltan® 812 (EPDM) von Firma DSM | 100 | Gew.-Teile |
| ZnO | 5 | Gew.-Teile |
| Stearinsäure | 2 | Gew.-Teile |
| Ruß FEF (entsprechend ASTM N-550) (BET 45 m²/9) | 90 | Gew.-Teile |
| Sillitin® N (Kieselsäure) (Firma Hoffmann & Söhne) | 55 | Gew.-Teile |
| Sunpar® 2280 (Mineralöl) (Sun Oil Corp.) | 70 | Gew.-Teile |

| CaO (Oberfläche mit Fettsäure behandelt) | 6 | Gew.-Teile |
|---|---|---|
| Vaseline | 5 | Gew.-Teile |
| Royalac® 133 (Dithiocarbamat/Thiazol-Gemisch) (Firma Uniroyal Co) | 1 | Gew.-Teile |
| Vulkacit® Mercapto (Mercaptobenzthiazol) (Firma Bayer AG) | 1,25 | Gew.-Teile |
| DPTT (Dipentamethylen-thiuramtetrasulfid) | 1 | Gew.-Teile |
| P extra N (Zink-ethylphenyldithiocarbamat) | 1,9 | Gew.-Teile |
| Sulfasan® R (Dithiodimorpholin) (Mon Santo Co) | 1 | Gew.-Teile |
| Schwefel | 0,5 | Gew.-Teile |

Die Verbundteile wurden durch Abschälen der Gummischicht einer Haftprüfung unterzogen. Außerdem wurden die Teile im 90 °C heißen Wasser 20 beziehungsweise 40 Stunden gelagert und danach einer Haftprüfung unterzogen. Die Beurteilung der Haftung erfolgte durch Ermittlung des Reißbildes nach folgendem Schema :

100 R = 100 % der Verbundfläche Gummiriß
100 G = 100 % der Verbundteile Trennung des Primers von der Glasoberfläche

| Primer | Reißbild | Wasserlagerung bei 90°C | |
|---|---|---|---|
| | | 10 Stunden | 20 Stunden |
| 1 | 80 R | 60 R - 40 G | 20 R - 80 G |
| 2 | 100 R | 50 R - 50 G | 20 R - 80 G |
| 3 | 100 R | 70 R - 20 G | 50 R - 50 G |
| 4 | 100 R | 100 R | 80 R - 20 G |
| 5 | 100 R | 100 R | 100 R |
| 6 | 100 R | 80 R - 20 G | 80 R - 20 G |

## Beispiel 2

Durch Zusätze von Polyurethanprepolymeren Rizinusöl/MDI[1] und PPG-[2] Addukt NCO : OH (1 : 2) mit endständigen OH-Gruppen können diese Primer mit PU-Klebern für die Metallklebungen verwendet werden. Hierzu wurden die in der nachstehenden Tabelle aufgeführten Gemische hergestellt und wie im Beispiel 1 erwähnt, auf saubere Glasoberflächen aufgetragen. Nach Trocknung der Primerschicht wurden die Teile mit einem handelsüblichen PU-Klebstoff beschichtet und nach der Trocknung an Stahl geklebt. Die Aushärtung erfolgte bei 160 °C während 30 min in der Presse

[1] MDI = Diphenylmethandiisocyanat
[2] PPG = Polypropylenglycol

| Primerzusammensetzung | Gew.% | | |
|---|---|---|---|
| | 7 | | 8 |
| $\gamma$- Aminopropylentriethoxysilan | 8 | | 8 |
| $\gamma$- Mercaptopropyltrimethoxy-silan | 2 | | 2 |
| Novolak-A | 3 | | 3 |
| t-Butylphenolharz ( Resol ) F= 80-90 | 4 | | 4 |
| Polymethylsilazan | – | | 1 |
| PU-Prepolymer ( Rizinusöl/MDI-PPG-Addukt | 1 | | 1 |
| Methylethylketon . | 47 | | 46 |
| Methylenchlorid | 35 | | 35 |



**0 150 482**

Die Prüfkörper wurden in einer Zerreißmaschine zerrissen. Die Ergebnisse der Haftprüfungen sind in der nachstehenden Tabelle zusammengefaßt. Weiterhin wurden die Prüfkörper im kochenden Wasser gelagert und anschließend zerrissen.

| Primer | $N/mm^2$ | Reißbild | 5 Stunden bei 90°C im Wasser gelagert $N/mm^2$ | Reißbild |
|---|---|---|---|---|
| 0-Wert | 8 | 100 G | 1,5 | 100 G |
| 5 | 25 | Glasbruch | 18 | Glasbruch |
| 7 | 22 | Glasbruch | 20 | Glasbruch |
| 8 | 25 | Glasbruch | 20 | Glasbruch |

Beispiel 3

Analog zu Beispiel 2 wurden die Versuche mit einem Acrylatkleber durchgeführt, d. h. die Versuche wurden anstelle eines PU-Klebers mit einem Polyacrylatkleber[x] vorgenommen. Nach Trocknung der Primerschicht wurden die Teile mit einem handelsüblichen Acrylatklebstoff beschichtet und an Stahl geklebt. Das Harz des Klebstoffes wurde auf die Glasseite und der Härter auf die Metallseite aufgetragen. Die Ergebnisse sind in der nachstehenden Tabelle zusammengefaßt.

| Primer | $N/mm^2$ | Reißbild | 5 Stunden bei 90°C im Wasser gelagert $N/mm^2$ | Reißbild |
|---|---|---|---|---|
| o-Wert | 2 | 100 G | – | 100 G |
| 5 | 11 | 100 G | 4 | 100 G |
| 7 | 8 | 100 G | 3 | 100 G |
| 8 | 12 | 70 G | 6 | 100 G |

[x] Polyacrylatkleber : Handelsüblicher 2-komponentiger « No-mix » — Acrylatkleber der 2. Generation, z. B. Pattex® No-mix.

**Patentansprüche**

1. Primer zur Vorbehandlung von Glas bei der wasserfesten Verklebung auf Basis von
— Harzen
— funktionellen Silanen
— Lösungsmitteln und weiteren Zusätzen
dadurch gekennzeichnet, daß Organosilazane und gewünschtenfalls mehrfunktionelle Isocyanate enthalten sind, und daß die Primer die folgende mengenmäßige Zusammensetzung aufweisen :

2-10 Gew.-% Harz
2,5-25 Gew.-% funktionelle Silane
0,5-5 Gew.-% Organosilazane
70-95 Gew.-% Lösungsmittel aus der Klasse der Ketone, Ester, aromatischen Kohlenwasserstoffe, aliphatischen Kohlenwasserstoffe oder Halogenkohlenwasserstoffe
0-10 Gew.-% polyfunktionelle Isocyanate

6

2. Primer nach Anspruch 1, dadurch gekennzeichnet, daß als Organosilazane Umsetzungsprodukte von Organohalogensilanen mit Ammoniak enthalten sind.

3. Primer nach den Ansprüchen 1 und 2, dadurch gekennzeichnet, daß als Organosilazane Umsetzungsprodukte von Ammoniak mit Dialkyldichlorsilanen und/oder Alkyltrichlorsilanen mit gleichen oder unterschiedlichen Alkylresten und/oder Umsetzungsprodukte von Ammoniak mit den entsprechenden Arylverbindungen und/oder Arylalkylverbindungen enthalten sind.

4. Primer nach den Ansprüchen 1 bis 3, dadurch gekennzeichnet, daß die enthaltenen Organosilazane Alkylgruppen mit 1 bis 7 C-Atomen aufweisen.

5. Primer nach den Ansprüchen 1 bis 4, dadurch gekennzeichnet, daß er die folgende mengenmäßige Zusammensetzung aufweist :

    3-7 Gew.-% Harz
    5-15 Gew.-% funktionelle Silane
    1-2 Gew.-% Organosilazane
    80-90 Gew.-% Lösungsmittel und
    1-6 Gew.-% polyfunktionelle Isocyanate

6. Primer nach den Ansprüchen 1 bis 5, dadurch gekennzeichnet, daß als mehrfunktionelle Isocyanate aliphatische Diisocyanate oder aromatische Diisocyanate, wie Toluylendiisocyanat oder Diphenylmethandiisocyanat oder Prepolymere aus mehrfunktionellen Alkoholen, insbesondere Diolen und Triolen mit einem Überschuß von mehr als 20 mol-% der vorgenannten aliphatischen und/oder aromatischen Diisocyanate enthalten sind.

7. Primer nach den Ansprüchen 1 bis 6, dadurch gekennzeichnet, daß als Harze reaktive Phenolharze, insbesondere Novolake, Terpen-modifizierte Phenolharze, Resorcin-Formaldehydharze, hydrierte Rosinharze und/oder Cumaron-Indenharze enthalten sind.

8. Primer nach den Ansprüchen 1 bis 7, dadurch gekennzeichnet, daß als Silane Produkte, die reaktive Gruppen enthalten, wie Vinyltriethoxysilan, Vinyltrimethoxysilan, Vinyl-tris(β-methoxyethoxy)-silan, γ-Methacryloxypropyltrimethoxy-silan, γ-Methacryloxypropyl-tris(2-methoxyethoxy)-silan, γ-Mercaptopropyl-trimethoxy-silan, γ-Aminopropyltriethoxysilan oder das Addukt von Acrylsäure an diese Verbindung oder γ-Chloropropyltrimethoxy-silan, γ-Glycidoxypropyltrimethoxy-silan, Vinyltriacetoxysilan, β(3,4-Epoxycyclohexyl)-ethyltrimethoxysilan sowie N-β-(aminoethyl)-γ-aminopropyltrimethoxysilan bzw. dessen Methacrylsäureaddukt in methanolischer Lösung enthalten sind.

9. Verwendung der Primer nach den Ansprüchen 1 bis 8 zur Vorbehandlung von Glas bei der Verklebung an Elastomere, Metalle oder andere flexible oder unflexible Substrate mittels dazu geeigneter Klebstoffe.

## Claims

1. Primers for the pretreatment of glass for waterproof bonding based on
— resins,
— functional silanes,
— solvents and other additives,
characterized in that organosilazanes and, if desired, polyfunctional isocyanates are present and in that the primers have the following quantitative composition :

    from 2 to 10 % by weight resin
    from 2.5 to 25 % by weight functional silanes,
    from 0.5 to 5 % by weight organosilazanes,
    from 70 to 95 % by weight solvents from the group comprising ketones, esters, aromatic hydrocarbons, aliphatic hydrocarbons or halogenated hydrocarbons,
    from 0 to 10 % by weight polyfunctional isocyanates.

2. Primers as claimed in Claim 1, characterized in that they contain reaction products of organohalogen silanes with ammonia as the organosilazanes.

3. Primers as claimed in Claims 1 and 2, characterized in that they contain reaction products of ammonia with dialkyl dichlorosilanes and/or alkyl trichlorosilanes with identical or different alkyl radicals and/or reaction products of ammonia with the corresponding aryl compounds and/or arylalkyl compounds as the organosilazanes.

4. Primers as claimed in Claims 1 to 3, characterized in that the organosilazanes present contain $C_1$-$C_7$ alkyl groups.

5. Primers as claimed in Claims 1 to 4, characterized in that they have the following quantitative composition :

    from 3 to 7 % by weight resin,

7

from 5 to 15 % by weight functional silanes,
from 1 to 2 % by weight organosilazanes,
from 80 to 90 % by weight solvents and
from 1 to 6 % by weight polyfunctional isocyanates.

6. Primers as claimed in Claims 1 to 5, characterized in that aliphatic diisocyanates or aromatic diisocyanates, such as tolylene diisocyanate or diphenylmethane diisocyanate, or prepolymers of polyfunctional alcohols, particularly diols and triols, with an excess of more than 20 mole-% of the above-mentioned aliphatic and/or aromatic diisocyanates are present as the polyfunctional isocyanates.

7. Primers as claimed in Claims 1 to 6, characterized in that reactive phenolic resins, particularly novolaks, terpene-modified phenolic resins, resorcinol-formaldehyde resins, hydrogenated rosin resins and/or coumarone-indene resins are present as the resins.

8. Primers as claimed in Claims 1 to 7, characterized in that products containing reactive groups, such as vinyl triethoxy silane, vinyl trimethoxy silane, vinyl-tris-($\beta$-methoxyethoxy)-silane, $\gamma$-methacryloxypropyl trimethoxy silane, $\gamma$-methacryloxypropyl-tris-(2-methoxyethoxy)-silane, $\gamma$-mercaptopropyl trimethoxy silane, $\gamma$-aminopropyl triethoxy silane or the adduct of acrylic acid with this compound or $\gamma$-chloropropyl trimethoxy silane, $\gamma$-glycidyloxypropyl trimethoxy silane, vinyl triacetoxy silane, $\beta$-(3,4-epoxycyclohexyl)-ethyl trimethoxy silane and N-$\beta$-(aminoethyl)-$\gamma$-aminopropyl trimethoxy silane or its adduct with methacrylic acid in methanolic solution are present as the silanes.

9. The use of the primers claimed in Claims 1 to 8 for the pretreatment of glass for bonding with elastomers, metals or other flexible or inflexible substrates using suitable adhesives.

**Revendications**

1. Apprêt pour le verre pour le traitement préalable du verre en vue d'un collage résistant à l'eau à base de :
— résines
— silanes fonctionnels
— solvants et autres additifs,
caractérisé en ce qu'il contient des organosilanes et, si on le désire, des isocyanates polyfonctionnels et que l'apprêt présente une composition où l'on trouve les proportions suivantes :

2 à 10 % en poids de résine,
2,5 à 25 % en poids de silanes fonctionnels,
0,5 à 5 % en poids d'organosilazanes,
70 à 95 % en poids d'un solvant de la classe des cétones, esters, hydrocarbures aromatiques, aliphatiques, halogénés,
0 à 10 % en poids d'isocyanates polyfonctionnels.

2. Apprêt suivant la revendication 1, caractérisé en ce qu'il contient, comme organosilazane, des produits de la réaction d'organosilanes halogénés avec du gaz ammoniac.

3. Apprêt suivant les revendications 1 et 2, caractérisé en ce qu'il contient comme organosilazane, des produits de la réaction de gaz ammoniac avec des dialcoyldichlorosilanes et/ou alcoyltrichlorosilanes avec des restes alcoyl semblables ou différents, et/ou des produits de la réaction de gaz ammoniac avec des composés aryl et/ou des composés arylalcoyl correspondants.

4. Apprêt suivant les revendications 1 à 3, caractérisé en ce que les organosilazanes contenus présentent des groupes alcoyl à 1 à 7 atomes C.

5. Apprêt suivant les revendications 1 à 4, caractérisé en ce qu'il présente dans sa composition les proportions de composés suivantes :

3 à 7 % en poids de résine,
5 à 15 % en poids de silanes fonctionnels,
1 à 2 % en poids d'organosilazane,
80 à 90 % en poids de solvants, et
1 à 6 % en poids d'isocyanates polyfonctionnels.

6. Apprêt suivant les revendications 1 à 5, caractérisé en ce que, comme isocyanates polyfonctionnels, il contient des diisocyanates aliphatiques ou des diisocyanates aromatiques, tels que des diisocyanates de toluylène, ou le diisocyanate de diphénylméthane, ou des prépolymères d'alcools polyfonctionnels, en particulier de diols et des triols, avec un excès de plus de 20 moles % des diisocyanates aliphatiques et/ou aromatiques mentionnés plus haut.

7. Apprêt suivant les revendications 1 à 6, caractérisé en ce qu'il contient, comme résines, des résines phénoliques réactives, en particulier les novolaques, résines phénoliques modifiées par le terpène, résines résorcine-formol, résines rosines hydrogénées et/ou résines de coumarone-indène.

8. Apprêt suivant les revendications 1 à 7, caractérisé en ce qu'il contient comme silane des produits qui contiennent des groupes réactifs tels que, par exemple, les vinyltriéthoxysilane, vinyltriméthoxysilane, vinyltris (β-méthoxyéthoxy)-silane, γ-méthacryloxypropyltriméthoxy-silane, γ-méthacryloxypropyl-tris(2-méthoxyéthoxy)-silane, γ-mercaptopropyl-triméthoxy-silane, γ-aminopropyltriéthoxysilane, ou le produit d'addition de l'acide acrylique sur ces composés, ou les γ-chloropropyltriméthoxy-silane, γ-glycidoxypropyltriméthoxy-silane, vinyltriacétoxysilane, β(3,4-époxy-cyclohexyl)-éthyltriméthoxysilane ainsi que N-β-(aminoéthyl)-γ-aminopropyltriméthoxysilane ou leurs produits d'addition avec l'acide méthacrylique, en solution méthanolique.

9. Utilisation de l'apprêt suivant les revendications 1 à 8 pour le traitement préalable du verre en vue d'y coller un élastomère, des métaux ou d'autres substrats souples ou non, au moyen d'adhésifs appropriés à cet effet.